# EUROPÄISCHE PATENTSCHRIFT

(11) **EP 2 823 347 B1**
(45) Veröffentlichungstag und Bekanntmachung des Hinweises auf die Patenterteilung: **13.04.2016**
(21) Anmeldenummer: 13706996.9
(22) Anmeldetag: 28.02.2013
(51) Int. Cl.: G02B 26/02, H04N 5/232, G02B 21/00, G01N 21/64

(54) **LICHTRASTERMIKROSKOP MIT SPEKTRALER DETEKTION**
LIGHT SCANNING MICROSCOPE WITH SPECTRAL DETECTION
MICROSCOPE OPTIQUE À BALAYAGE, À DÉTECTION SPECTRALE

(30) Priorität: 09.03.2012 DE 102012203736
(43) Veröffentlichungstag der Anmeldung: 14.01.2015
(73) Patentinhaber: Carl Zeiss Microscopy GmbH, 07745 Jena (DE)
(72) Erfinder: ANHUT, Tiemo, 07743 Jena (DE); SCHWEDT, Daniel, 99423 Weimar (DE); WOLLESCHENSKY, Ralf, 07743 Jena (DE); WITTIG, Lars-Christian, 07745 Jena (DE); PREISSER, Ulrich, 07745 Jena (DE)
(74) Vertreter: Hampe, Holger
(86) Internationale Anmeldenummer: PCT/EP2013/054075
(87) Internationale Veröffentlichungsnummer: WO 2013/131808

(56) Entgegenhaltungen:
- DE-A1-102006 045 839
- JP-A- 2003 140 051
- US-A- 5 537 247

## Beschreibung

Lichtrastermikroskope mit spektraler Detektion werden z.B. zur Fluoreszenzmikroskopie an biologischen Proben eingesetzt, um diese mit einer sehr hohen räumlichen Auflösung untersuchen zu können. Solche biologischen Proben sind häufig durch ein oder mehrere Fluoreszenzfarbstoffe (bzw. fluoreszente Proteine) markiert und es handelt sich beispielsweise um lebende Zellen, an welchen dynamische Effekte untersucht werden sollen. Daher ist einerseits die spektrale Sensitivität und andererseits die Geschwindigkeit der Bildaufnahme bei möglichst geringer Anregungsleistung wichtig, um die Phototoxizität des Experimentes zu minimieren. Es hängt somit jeweils von der individuellen Probe und dem Untersuchungsziel ab, ob z.B. eine spektral hochauflösende Bildgebung oder eine schnellere Bildgebung mit eingeschränkterer spektraler Auflösung gewünscht ist.

DE 10 2006 045839 offenbart ein Lichtrastermikroskop.

Ausgehend hiervon ist es daher Aufgabe der Erfindung, ein Lichtrastermikroskop zum spektralen Detektieren so weiterzubilden, daß es leicht an unterschiedliche gewünschte Rahmenbedingungen zur Untersuchung einer Probe anpaßbar ist.

Die Aufgabe wird gelöst durch ein Lichtrastermikroskop mit einem Beleuchtungsmodul zum Anregen von Probenstrahlung in einem vorbestimmten Bereich einer Probe, das zwischen einer Beleuchtung mit m Spots, wobei m eine ganze Zahl ist, die größer oder gleich 1 ist, und einer Beleuchtung mit n Spots, wobei n eine ganze Zahl und größer als m ist, umschaltbar ist, einer Ablenkeinheit, die die m bzw. n Spots in dem vorbestimmten Bereich bewegt, und einem Detektormodul zum konfokalen und spektral aufgelösten Detektieren der Probenstrahlung, wobei das Detektormodul eine Konfokalblendeneinheit, eine der Konfokalblendeneinheit nachgeordnete Aufspaltungseinheit zum spektralen Auffächern der Probenstrahlung in Teilstrahlen, einen Detektor und eine Abbildungseinheit, die die Teilstrahlen räumlich getrennt auf den Detektor abbildet, aufweist, wobei die Konfokalblendeneinheit zwischen einer Konfokalblende mit genau m Öffnungen für die Probenstrahlung bei Beleuchtung mit m Spots und einer Konfokalblende mit n Öffnungen für die Probenstrahlung bei Beleuchtung mit n Spots umschaltbar ist, und die Aufspaltungseinheit von der Konfokalblendeneinheit bis zur Abbildungseinheit einen ersten Strahlweg für die Probenstrahlung bei Beleuchtung mit m Spots und einen zweiten Strahlweg für die Probenstrahlung bei Beleuchtung mit n Spots aufweist und die Aufspaltungseinheit zwischen beiden Strahlwegen umschaltbar ist.

Durch das Vorsehen der Konfokalblendeneinheit in Kombination mit der die umschaltbaren Strahlwege aufweisenden Aufspaltungseinheit kann für jede der möglichen Beleuchtungen die optimal konfokal und spektral aufgelöste Detektion bereitgestellt werden.

Die konfokale Blendeneinheit kann eine Konfokalblende aufweisen, die zwischen m und n Öffnungen umschaltbar ist. Alternativ kann die Konfokalblendeneinheit eine erste Konfokalblende mit genau m Öffnungen und eine zweite Konfokalblende mit n Öffnungen aufweisen, wobei die Umschaltung zwischen der ersten und zweiten Konfokalblende durch die Umschaltung des Strahlweges bewirkt ist. Insbesondere kann die Konfokalblende mit n Öffnungen genau n Öffnungen aufweisen.

Durch die Umschaltbarkeit zwischen den m und n Öffnungen sind k=2 verschiedene Betriebsmodi des Lichtrastermikroskops möglich. Man kann auch von k verschiedenen Parallelisierungsstufen sprechen. Natürlich kann k auch größer als zwei sein. Dann kann die Konfokalblende zwischen k verschiedenen Zuständen mit k verschiedenen Öffnungen umgeschaltet werden. Ferner kann das Beleuchtungsmodul bevorzugt für alle k Zustände jeweils die entsprechende Anzahl von Beleuchtungsspots bereitstellen.

Bei den Öffnungen der konfokalen Blende(n) kann es sich einerseits tatsächlich um Öffnungen bzw. transparente Bereiche in einer Blende handeln. Andererseits ist es möglich, die Öffnungen der Konfokalblende(n) durch einen reflektiven Abschnitt zu bewirken, so daß nur Licht, das auf den reflektiven Abschnitt fällt, zur Aufspaltungseinheit gelangt. Der spiegelnde Abschnitt ist quasi eine "invertierte" Öffnung. Obwohl hier in der Regel von Öffnung die Rede ist, soll unter dem Begriff Öffnung sowohl eine Öffnung bzw. ein transparenter Bereich einer Blende im klassischen Sinne als auch ein reflektiver Abschnitt, der als konfokale Blende wirkt, wie beschrieben, verstanden werden.

Die m und/oder n Öffnungen sind beispielsweise abhängig voneinander größenverstellbar und können insbesondere so justiert sein, daß alle n Blendenöffnungen bzw. alle m Blendenöffnungen stets gleich groß sind. Es ist auch möglich, daß die m und die n Blendenöffnungen unabhängig voneinander größenverstellbar sind.

Insbesondere ist die Konfokalblende bzw. sind die Konfokalblenden so ausgebildet, daß die m bzw. n Öffnungen stufenlos größenverstellbar sind.

Ferner kann die Konfokalblendeneinheit so ausgebildet sein, daß die Anzahl der m Öffnungen oder der n Öffnungen änderbar ist.

Es ist ferner bevorzugt, daß m = 1 ist. In diesem Fall kann die Konfokalblende mit genau einer Öffnung auch als monofokale Blende bezeichnet werden. Wenn n größer als 1 ist, kann die Blende als multifokale Blende bezeichnet werden. Die Konfokalblende mit n Öffnungen ist stets eine multifokale Blende, da sie zumindest zwei Öffnungen aufweist.

Die m bzw. n Blendenöffnungen der multifokalen Blende können auf einer Linie liegen. Es sind auch andere Anordnungen möglich, so können die m bzw. n Blendenöffnungen in einer zweidimensionalen Matrix angeordnet sein. Eine Blendenöffnung der multifokalen Blende kann auf der Hauptstrahlachse bei monofokaler Detektion, wenn die Probe mit einem Spot beleuchtet wird, liegen.

Die Konfokalblendeneinheit kann zwei Blendenelemente aufweisen, die relativ zueinander verschiebbar sind, um dadurch die m bzw. n Öffnung(en) der Konfokalblende zu ändern und/oder zwischen den beiden Konfokalblenden umzuschalten. Zur Bewegung der beiden Blendenelemente können Festkörpergelenke, Piezoaktuatoren und/oder Stellmotoren verwendet werden. Es sind auch sonstige Stellmittel möglich, um die Verschiebung zu bewirken.

Der Detektor kann bei Detektion mit der konfokalen Blende mit genau m Öffnungen ein Detektor mit einer Mehrzahl von linear angeordneten Detektorelementen sein oder ein Detektor mit einer Mehrzahl von zweidimensional angeordneten Detektorelementen. Gleiches gilt für den Detektor bei Detektion mit der Konfokalblende mit n Öffnungen. Insbesondere kann derselbe Detektor bei Detektion mit der Konfokalblende mit genau m Öffnungen und bei Detektion mit der Konfokalblende mit n Öffnungen verwendet werden. Bei dem Detektor kann es sich insbesondere um eine Detektionseinheit, einen mehrelementigen Detektor, einen Detektor, der ein- oder zweidimensional angeordnete Detektorelemente aufweist, einen Multianoden-Photomultiplier oder z.B. um ein ein- oder zweidimensionales Avalanche-Photodioden-Array handeln.

Ferner kann insbesondere dieselbe Abbildungseinheit die Teilstrahlen unabhängig davon, ob sie vom ersten oder zweiten Strahlweg stammen, auf dem Detektor abbilden. In diesem Fall liegt somit ein gemeinsamer Strahlweg für die Teilstrahlen von der Abbildungseinheit bis zum Detektor vor.

Dazu kann z.B. ein umschaltbarer bzw. bewegbarer Spiegel (beispielsweise Hohlspiegel) vorgesehen sein, der jeweils vom ersten oder zweiten Strahlweg auf den gemeinsamen Strahlweg umlenkt. Ferner kann ein bewegbarer bzw. schaltbarer Spiegel vorgesehen sein, der nach der Konfokalblendeneinheit angeordnet ist und zwischen dem ersten und zweiten Strahlweg umschaltet. Statt den Spiegeln zur Umschaltung der Strahlwege können auch sonstige geeignete optische Elemente, wie z.B. Prismen, vorgesehen werden. Diese Elemente können, sofern möglich, auch zum spektralen Auffächern genutzt werden.

Bei dem erfindungsgemäßen Lichtrastermikroskop kann in jedem der beiden Strahlwege eine separate Einheit zum spektralen Auffächern der Probenstrahlung angeordnet sein.

Die separate Einheit kann' jeweils ein Dispersionsprisma, ein Reflexionsgitter, ein Transmissionsgitter und/oder einen oder mehrere Filter aufweisen. Auch ist es möglich, durch zumindest einen Filter und/oder zumindest ein Prisma eine Vörzerlegung in einer Richtung und durch ein Gitter eine weitere Zerlegung in einer anderen Richtung durchzuführen.

Durch diese Art und Weise ist es möglich, die Probenstrahlung bei der Beleuchtung mit mehreren Spots (z.B. n Spots) so zu zerlegen, daß Spektrum und Ort orthogonal zueinander stehen, wobei dann bevorzugt eine Abbildung auf einen zweidimensionalen Detektor durchgeführt wird.

Auch ist es möglich, die Probenstrahlung bei Beleuchtung mit mehreren Spots (z.B. n Spots) so aufzuspalten, daß Spektrum und Ort der Spots in derselben Richtung aufgespaltet sind, wobei die verschiedenen Spots spektral aufgespalten nebeneinander angeordnet sind. In diesem Fall kann der Detektor z.B. als linearer Sensor ausgebildet sein.

Die Aufspaltung kann mittels einem Dispersionsprisma, einem Reflexionsgitter, einem Transmissionsgitter und/oder durch ein oder mehrere Filter durchgeführt werden.

Es ist bevorzugt, daß der Spotabstand zuvor mittels einer Vergrößerungsoptik (z.B. Teleskopoptik) auf die Detektorgröße angepaßt ist. In einer Ebene, in der die Spots bzw. Bündel räumlich getrennt vorliegen, kann mittels einer segmentierten Optik eine Winkelvergrößerung vorgenommen werden, ohne den optischen Abbildungsmaßstab zu vergrößern. Dazu kann z.B. ein Spiegel mit einer Vielzahl von Facetten, die in festen Winkelbeziehungen zueinander stehen, eingesetzt werden. Auch kann ein Spiegel mit einer Vielzahl von Facetten, deren Winkelbeziehungen zueinander einstellbar ist, eingestellt werden. Die Anzahl der Facetten des segmentierten Spiegels ist bevorzugt gleich der Anzahl der Spots. In einer Pupillenebene vor dem segmentierten Spiegel kann eine Blende zur Blockung von an der konfokalen Blende gebeugten Lichtanteilen positioniert sein.

Die segmentierte Optik kann als Matrix aus Mikrolinsen ausgebildet sein. Die Mikrolinsen können jeweils eine negative Brechkraft aufweisen. Die Mikrolinsen können hinter der Konfokalblende angeordnet sein oder sie können hinter dem Zwischenbild der Teleskopoptik positioniert sein. Insbesondere kann der Abstand wenige Millimeter betragen.

Ferner kann die segmentierte Optik als Wellenleiterstruktur ausgebildet sein, wobei jedem Spot bzw. Bündel mindestens ein Wellenleiter zugeordnet ist. Die Eingänge der Wellenleiterstruktur sind bevorzugt in der Brennebene der Eingangslinse der Teleskopoptik positioniert. Die Ausgänge der Wellenleiterstruktur können in der Brennebene der Ausgangslinie der Teleskopoptik positioniert sein.

Die Ausgänge der Wellenleiterstruktur weisen größere Abstände zueinander auf als die Eingänge. Die Wellenleiterstruktur kann insbesondere als Bündel aus Lichtleitfasern ausgewählt sein.

Insbesondere kann die Aufspaltungseinheit bei dem erfindungsgemäßen Lichtrastermikroskop eine Vergrößerungsoptik und eine Optikeinheit zur lokalen Erhöhung der numerischen Apertur der Teilstrahlen aufweisen. Eine solche Optikeinheit zur lokalen Erhöhung der numerischen Apertur kann beispielsweise durch ein Mikrolinsenarray, bei dem die einzelnen Linsen jeweils negative Brechkraft aufweisen, verwirklicht sein. Das Mikrolinsenarray kann hinter der Konfokalblende angeordnet sein oder kann hinter einem Zwischenbild der Vergrößerungsoptik positioniert sein. Insbesondere kann der Abstand wenige Millimeter betragen. Durch die Optikeinheit zur lokalen Erhöhung der numerischen Apertur erhält man einen kleineren Fokus in der Detektorebene und kann daher in vorteilhafter Weise den Vergrößerungsfaktor der Vergrößerungsoptik anheben.

Bevorzugt ist die Optikeinheit zur lokalen Erhöhung der numerischen Apertur vor der Vergrößerungsoptik angeordnet, so daß bei den Teilstrahlen zuerst die numerische Apertur erhöht wird und danach die optische Vergrößerung mittels der Vergrößerungsoptik erfolgt.

Des weiteren kann die Aufspaltungseinheit zusätzlich oder als Alternative eine Vergrößerungsoptik mit einer ersten und einer zweiten Teiloptik sowie eine Wellenleiterstruktur aufweisen, wobei die erste Teiloptik eine zwischen beiden Teiloptiken liegende erste Fokusebene und die zweite Teiloptik eine von der ersten Fokusebene beabstandete sowie zwischen beiden Teiloptiken liegende zweite Fokusebene aufweist und die Wellenleiterstruktur für jede der m oder n Öffnungen der Konfokalblendeneinheit einen Wellenleiter aufweist, wobei die Eingänge der Wellenleiter in der ersten Fokusebene und die Ausgänge der Wellenleiter in der zweiten Fokusebene liegen und wobei der Abstand der Ausgänge der Wellenleiter größer ist als der Abstand der Eingänge der Wellenleiter. Somit verschieben die Wellenleiter die Punktbilder der Spots von der ersten Fokusebene zur zweiten Fokusebene.

Die Vergrößerungsoptik kann z. B. dadurch hergestellt werden, daß man von einer Teleskopoptik mit einer Zwischenbildebene ausgeht. Die Teleskopoptik weist zwei Teiloptiken auf, deren Abstand voneinander erhöht wird, so daß somit die Fokusebenen auseinandergezogen werden. Der Abstand zwischen den beiden auseinandergezogenen Fokusebenen wird dann mittels der Wellenleiter überbrückt, wobei diese die beschriebene Verschiebung der Punktbilder zueinander erzeugen. Die Wellenleiter können beispielsweise als Glasfaserbündel oder als Wave-Guide-Struktur realisiert werden.

Die spektrale Aufspaltung der Probenstrahlung bei Beleuchtung mit mehreren Spots (z.B. n Spots) derart, daß Spektrum und Ort der Spots in derselben Richtung aufgespalten sind, wobei die verschiedenen Spots spektral aufgespalten nebeneinander angeordnet sind, kann auch dadurch erreicht werden, daß mehrere Filter eine Vielzahl von Spektralkanälen erzeugen, die aufgrund der Filterorientierung auf unterschiedliche Sensorelemente abgebildet werden. Insbesondere können einstellbare Kantenfilter eingesetzt werden. Bei dieser Art der Aufspaltung liegen die den Filtern entsprechenden Spektralkanäle nebeneinander und in jedem Spektralkanal liegen jeweils die Spots nebeneinander.

Insbesondere kann die Aufspaltungseinheit bei Beleuchtung mit n Spots Spektrum und Ort der Spots in derselben Richtung so aufspalten, daß Teile gleicher Wellenlänge der Spots direkt nebeneinander liegen.

Die Vielzahl von Spektralkanälen verlassen die Anordnung der Filter in Bündeln, die die spotbezogenen Teilbündel zusammenfassen. Diese Bündel werden bevorzugt so auf dem Detektor abgebildet, daß sie um mindestens ein Sensorelement voneinander beabstandet sind. Jedes Bündel und somit jeder Spektralkanal kann über einen weiteren Transmissionsfilter in seiner Bandbreite beschränkt sein. Dabei kann der Transmissionsfilter beispielsweise ein Kantenfilter oder ein Bandpaßfilter sein.

Die Bündel und somit jeder Spektralkanal können bevorzugt so auf dem Detektor abgebildet sein, daß sie um mindestens ein Sensorelement voneinander beabstandet sind.

Neben der Abbildung der Spektralkanäle auf einen linearen Detektor ist auch eine Abbildung auf einen zweidimensionalen Detektor möglich.

Bei dem erfindungsgemäßen Lichtrastermikroskop kann die Ablenkeinheit dem Detektormodul die Probenstrahlung als descannte Probenstrahlung zuführen. Darunter wird insbesondere verstanden, daß die angeregte Probenstrahlung, die entgegengesetzt zur Richtung der Beleuchtungsstrahlüng läuft und auf die Ablenkeinheit trifft, hinter der.Ablenkeinheit als ruhende Probenstrahlung vorliegt.

Das Lichtrastermikroskop kann insbesondere als Laserscanningmikroskop ausgebildet sein. In diesem Fall wird Laserstrahlung zur Beleuchtung der Probe eingesetzt. Es ist jedoch auch möglich, andere Strahlung als Laserstrahlung zur Beleuchtung der Probe zu verwenden.

Des weiteren kann auch im Beleuchtungsmodul eine Konfokalblendeneinheit vorgesehen sein, um die umschaltbare Beleuchtung mit m oder n Spots zu verwirklichen. Die Konfokalblendeneinheit des Beleuchtungsmoduls kann insbesondere in gleicher Weise ausgebildet sein wie die Konfokalblendeneinheit des Detektormoduls.

Ferner kann das Lichtrastermikroskop noch weitere dem Fachmann bekannte Module aufweisen, die zum Betrieb des Lichtrastermikroskops notwendig sind.

Es wird ferner ein Lichtrastermikroskopierverfahren bereitgestellt, bei dem die Beleuchtung eines vorbestimmten Bereiches einer Probe zum Anregen von Probenstrahlung zwischen einer Beleuchtung mit m Spots, wobei m eine ganze Zahl und größer oder gleich 1 ist, und einer Beleuchtung mit n Spots, wobei n eine ganze Zahl und größer als m ist, umschaltbar ist, die m bzw. n Spots zur Beleuchtung in dem vorbestimmten Bereich bewegt werden und die Probenstrahlung mit einem Detektormodul konfokal und spektral aufgelöst detektiert wird, wobei das Detektormodul eine Konfokalblendeneinheit, eine der Konfokalblendeneinheit nachgeordnete Aufspaltungseinheit zum spektralen Auffächern der Probenstrahlung in Teilstrahlen, einen Detektor und eine Abbildungseinheit, die die Teilstrahlen räumlich getrennt auf den Detektor abbildet, aufweist, wobei die Konfokalblendeneinheit zwischen einer Konfokalblende mit genau m Öffnungen für die Probenstrahlung bei Beleuchtung mit m Spots und einer Konfokalblende mit n Öffnungen für die Probenstrahlung bei Beleuchtung mit n Spots umgeschaltet wird und die Aufspaltungseinheit zwischen einem von der Konfokalblendeneinheit bis zur Abbildungseinheit verlaufenden ersten Strahlweg für die Probenstrahlung bei Beleuchtung mit m. Spots und einem von der Konfokalblendeneinheit bis zur Abbildungseinheit verlaufenden zweiten Strahlweg für die Probenstrahlung bei Beleuchtung mit n Spots umgeschaltet wird.

Das erfindungsgemäße Lichtrastermikroskopierverfahren kann in gleicher Weise wie das erfindungsgemäße Lichtrastermikroskop weitergebildet werden. Insbesondere kann es die im Zusammenhang mit dem erfindungsgemäßen Lichtrastermikroskop sowie seiner Weiterbildung beschriebenen Verfahrensschritte aufweisen.

Es versteht sich, daß die vorstehend genannten und die nachstehend noch zu erläuternden Merkmale nicht nur in den angegebenen Kombinationen, sondern auch in anderen Kombinationen oder in Alleinstellung einsetzbar sind, ohne den Rahmen der vorliegenden Erfindung zu verlassen.

Nachfolgend wird die Erfindung beispielsweise anhand der beigefügten Zeichnungen, die auch erfindungswesentliche Merkmale offenbaren, noch näher erläutert. Es zeigen:
- Fig. 1: eine schematische Ansicht einer ersten Ausführungsform des erfindungsgemäßen Lichtrastermikroskops;
- Fig. 2: eine schematische Darstellung des Beleuchtungsmoduls 2 des Lichtrastermikroskops von Fig. 1;
- Fig. 3: eine schematische Darstellung von zwei Blendenelementen der Konfokalblende der Konfokalblendeneinheit 9 von Fig. 1;
- Fig. 4A-4C: verschiedene Stellungen der beiden Blendenelemente zueinander, um die Größe eines einzelnen Pinholes zu ändern;
- Fig. 5A-5C: verschiedene Stellungen der Blendenelemente zueinander um die Größe von vier Pinholes zu ändern;
- Fig. 6: eine Ansicht eines weiteren Blendenelements;
- Fig. 7: eine schematische Darstellung des Detektors 11;
- Fig. 8: eine schematische Darstellung des Detektormoduls 7 von Fig. 1;
- Fig. 9: eine vergrößerte Darstellung des Segmentspiegels 43 von Fig. 8;
- Fig. 10: eine Darstellung einer weiteren Ausführungsform des Detektormoduls 7 von Fig. 1;

- Fig. 11: eine vergrößerte Ansicht des Details A von Fig. 10, und
- Fig. 12: eine weitere Ansicht des Detektors 11.

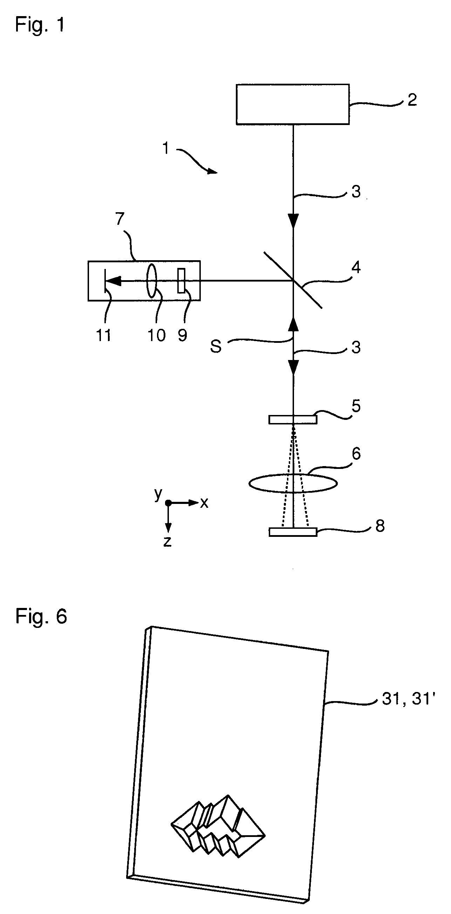

Bei der in Fig. 1 gezeigten Ausführungsform umfaßt das erfindungsgemäße Lichtrastermikroskop 1, das insbesondere als Laser-Scanning-Mikroskop ausgebildet sein kann, ein Beleuchtungsmodul 2, das Beleuchtungsstrahlung 3 abgibt, einen Hauptteiler 4, der zumindest einen Teil der Beleuchtungsstrahlung 3 durchläßt, eine Ablenkeinheit 5, ein Objektiv 6 sowie ein Detektormodul 7.

Das Beleuchtungsmodul 2 ist so ausgebildet, das es zwischen einer Singlespotbeleuchtung und einer Multispotbeleuchtung umschaltbar ist. Der Single- bzw. Multispot der Beleuchtung wird bzw. werden mittels der Ablenkeinheit 5, die z.B. einen oder zwei Galvanometerspiegel aufweist, in einem vorbestimmten Bereich einer zu untersuchenden Probe 8 bewegt, wie schematisch durch die gestrichelten Linien angedeutet ist. Man spricht in diesem Zusammenhang auch davon, daß der Singlespot bzw. der Multispot im vorbestimmten Bereich eine scannende Bewegung ausführen. Dadurch kann der vorbestimmte Bereich mit dem Single-oder Multispot abgerastert werden. Die Ablenkeinheit 5 wird daher häufig als Scanner bezeichnet.

Bei dem Singlespot handelt es sich z.B. um einen im vorbestimmten Bereich der Probe 8 punktförmig fokussierten Laserstrahl, der mittels der Ablenkeinheit 5 in zumindest einer Richtung (x- und/oder y-Richtung) quer zur Ausbreitungsrichtung (z-Richtung) des Laserstrahls bewegt wird, damit die scannende Bewegung erzielt wird. Bei dem Multispot handelt es sich z.B. um mehrere im vorbestimmten Bereich punktförmig fokussierte Laserstrahlen, die im vorbestimmten Bereich voneinander beabstandet sind und mittels der Ablenkeinheit 5 gleichzeitig in x- und/oder y-Richtung bewegt werden, um die scannende Bewegung zu erzeugen. Natürlich sind Single- und Multispot nicht auf eine punktförmige Fokussierung im vorbestimmten Bereich der Probe 8 beschränkt. Es sind auch andere Arten der Fokussierung möglich, wie z.B. ein Linienfokus. In der nachfolgenden Beschreibung wird jedoch von einer punktförmigen Fokussierung ausgegangen.

Durch die Singlespot- oder Multispot-Beleuchtung wird in der Probe 8 Probenstrahlung S (z.B. Fluoreszenzstrahlung) erzeugt, die entgegengesetzt zur Beleuchtungsstrahlung 3 über das Objektiv 6 zur Ablenkeinheit 5 läuft, von dieser descannt wird (hinter der Ablenkeinheit 5 liegt die Probenstrahlung, S als ruhende Strahlung, die nicht mehr quer zur Ausbreitungsrichtung bewegt ist, vor) und dann am Hauptteiler 4 zum Detektormodul 7 hin umgelenkt wird.

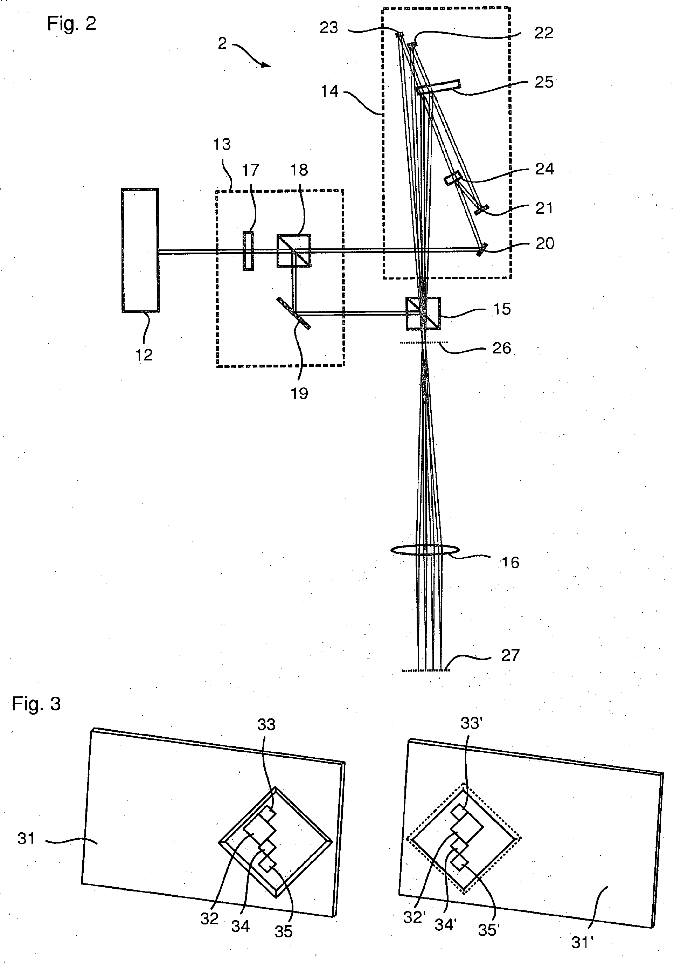

Das Detektormodul 7 führt eine konfokale und spektral aufgelöste Detektion der Probenstrahlung S durch, wozu es eine Konfokalblendeneinheit 9, eine dieser nachgeordnete Abbildungsoptik 10 sowie einen Detektor 11 aufweist, wie nachfolgend noch detaillierter beschrieben wird. Natürlich kann das Lichtrastermikroskop 1 auch so ausgebildet sein, daß das Beleuchtungsmodul 2 den Hauptteiler 4 in Reflexion nutzt und die Probenstrahlung 5 in Transmission über den Hauptteiler 4 zum Detektormodul 7 geführt wird. Zunächst wird das Beleuchtungsmodul in Verbindung mit Fig. 2 näher beschrieben.

Das Beleuchtungsmodul umfaßt einen Laser 12, eine dem Laser 12 nachgeordnete Schalteinheit 13, eine Strahlteilungseinheit 14, einen ersten polarisationsoptischen Strahlteiler 15 sowie eine Beleuchtungsmoduloptik 16.

Die vom Laser 12 abgegebene Laserstrahlung wird zu der Schalteinheit 13 geführt, die zwischen zwei Lichtwegen umschaltbar ist. Dazu weist sie eine rotierbar angeordnete Halbwellenplatte 17 auf, mit der der Polarisationszustand der Laserstrahlung verändert werden kann. In Abhängigkeit des gewählten Polarisationszustandes wird die Laserstrahlung von einem zweiten polarisationsoptischen Strahlteiler 18 entweder zur Strahlteilungseinheit 14 oder zu einem Umlenkspiegel 19 der Schalteinheit 13 geführt.

In Fig. 2 ist detaillierter der Fall gezeigt, bei dem die Strahlung entlang des ersten Lichtweges der Schalteinheit 13 in die Strahlteilungseinheit 14 geführt wird, die vier hochreflektierende Spiegel 20 bis 23 und zwei 50:50-Teiler 24 und 25, die auf einer Seite eine Teilerschicht und auf der anderen Seite eine reflexvermindernde Schicht aufweisen, umfaßt. Die Spiegel 20 bis 23 sind bevorzugt dielektrische Spiegel mit einem Reflexionsgrad von größer als 99,5%, damit strahlwegabhängige Verluste auf ein Minimum reduziert werden. Der Hintergrund ist der, daß die Teilstrahlen in der Strahlteilungseinheit 14 auf eine unterschiedliche Anzahl von Spiegelflächen treffen und daher die Spiegel 20 bis 23 bevorzugt eine besonders hohe Reflektivität aufweisen, so daß sich die Verluste nicht ungleichmäßig aufaddieren. Die Spiegel 20 bis 23 und die Teiler 24 und 25 sind in der Strahlteilungseinheit 14 so angeordnet, daß vier Strahlen in einer Ebene aufgespannt werden und benachbarte Strahlen jeweils einen konstanten Winkel miteinander einschließen. Die Strahlen schneiden sich somit in einer hinter dem ersten Strahlteiler 15 liegenden Pupillenebene 26, welche durch die Beleuchtungsmoduloptik 16 auf die Ablenkeinheit 5 (bzw. Scanner) und in die Pupille des Objektives 6 abgebildet wird. In der durch die Beleuchtungsmoduloptik 16 erzeugte Zwischenbildebene 27 liegen dann vier entlang einer Linie aufgereihte Laserspots mit konstanten Abständen zueinander und annähernd gleicher Helligkeit vor.

Die Spiegel 20-23 und die Teiler 24 und 25 in der Strahlteilungseinheit 14 können auch so angeordnet sein, daß die Teilstrahlen in einer gemeinsamen Ebene unter konstanten Winkeln auseinanderlaufen. In diesem Fall schneiden sich die rückwärtig verlängerten Strahlen in einer virtuellen Pupille, welche dann auf den Scanner 5 und in die Pupille des Objektives 6 abgebildet werden muß. Diese Konfiguration ist besonders bauraumsparend.

Die Aufteilung in vier Teilstrahlen ist nur beispielhaft zu verstehen. Natürlich kann auch eine Aufteilung in einer größere Anzahl von Teilstrahlen durchgeführt werden. In diesem Fall müssen lediglich eine entsprechende Anzahl von Teilern 24, 25 und Spiegeln 20-23 vorgesehen werden. Auch ist es möglich, einen oder mehrere Teilstrahlen zu blockieren, so daß eine entsprechend geeignete Anzahl von Teilstrahlen als Beleuchtungsstrahlung erzeugt wird.

Alternativ kann die Strahlung des Lasers 12 bei geeigneter Stellung der Halbwellenplatte 17 nicht in die Strahlteilungseinheit 14 geführt werden, sondern entlang des zweiten Lichtweges der Schalteinheit 13 über den Umlenkspiegel 19 direkt zu dem ersten polarisationsoptischen Strahlteiler 15. Es liegt dann ein einzelner fokussierter Spot in der Zwischenbildebene 27 vor.

Somit kann bei der beschriebenen Ausführungsform mit dem Beleuchtungsmodul 2 bei der Singlespotbeleuchtung ein einzelner Laserspot erzeugt werden, der mittels des Scanners 5 über die Probe 8 geführt wird. In der Multispotbeleuchtung werden vier nebeneinander in einer Linie liegende Laserspots erzeugt, die wiederum mittels dem Scanner 5 über die Probe 8 geführt werden.

Die Laserstrahlung des Lasers 12 kann über eine Freistrahlstrecke oder über eine Lichtleitfaser zur Schalteinheit 13 geführt werden. Die Schalteinheit 13 kann als separates Gerät, eine im Strahlengang des Lichtrastermikroskops 1 integrierte Baugruppe oder als Teil des Lasers 12 (beispielsweise als Faserschalter oder integriert optischer Schalter) realisiert sein.

In dem beschriebenen Ausführungsbeispiel erfolgt die Strahlteilung und -vereinigung mittels der polarisationsoptischen Strahlteiler 15, 18 und die Auswahl der Lichtwege und damit die Betriebsart des Beleuchtungsmoduls 2 mittels der Halbwellenplatte 17. Es sind jedoch auch andere Anordnungen möglich, so kann z.B. die Umschaltung der Strahlenwege mittels schaltbarer Spiegel (wie z.B. Klappspiegel, Galvospiegel oder MOEMS = optische Mikrosysteme) verwirklicht sein. Auch können für die Strahlteilung in der Schalteinheit 13 einerseits und die Strahlvereinigung andererseits verschiedene Wirkprinzipien genutzt werden, wie z.B. schaltbarer Spiegel für die Umschaltung der Strahlenwege und polarisationsoptische Strahlteiler zur Strahlvereinigung.

Mit diesem umschaltbaren Beleuchtungsmodul 2 ist es somit möglich, zwischen einer Singlespotbeleuchtung und einer Multispotbeleuclitung (hier mit vier Spots) umzuschalten. Um eine konfokale Detektion sowohl für die Singlespot- als auch die Multispotbeleuchtung durchführen zu können, weist die Konfokalblendeneinheit 9 bei der hier beschriebenen Ausführungsform ein erstes und ein zweites Blendenelement 31, 31' auf, die schematisch in Fig. 3 dargestellt sind. Die Blendenelemente 31, 31' weisen jeweils eine rechteckige Hauptöffnung 32, 32' sowie daran angrenzende rechteckige Nebenöffnungen 33, 33', 34, 34' sowie 35 und 35' auf.

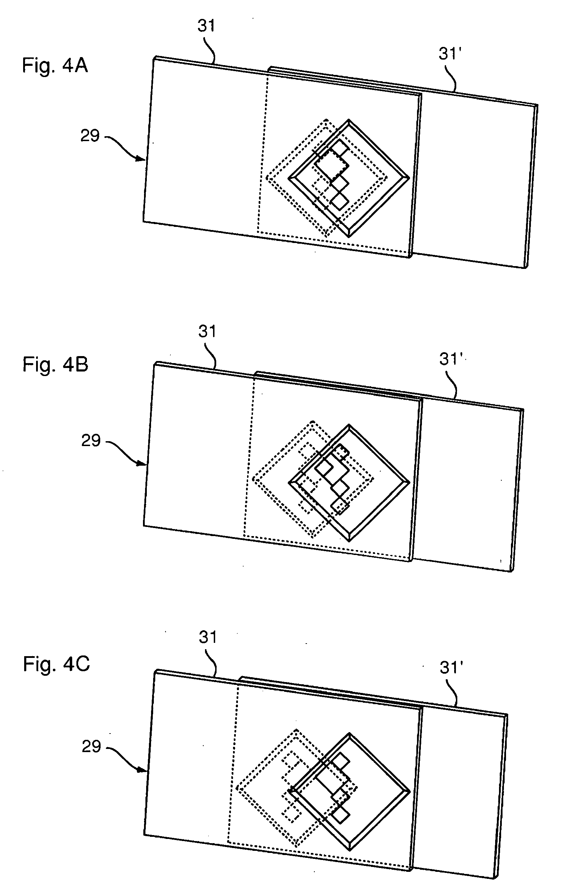

Die Blendenelemente 31 und 31' sind gegeneinander verschiebbar, wie den Darstellungen von Fig. 4A bis 4C schematisch dargestellt ist, und bilden eine einstellbare Konfokalblende 29. Bei Fig. 4A liegen die beiden Hauptöffnungen 32 und 32' deckungsgleich hintereinander, so daß ein Pinhole mit einer Kantenlänge von etwa 400 µm bereitgestellt ist.

Bei der in Fig. 4B gezeigten Stellung der beiden Blendenelemente 31 und 31' überdecken sich die beiden Hauptöffnungen 32 und 32' nur noch teilweise, so daß das bereitgestellte Pinhole in diesem Fall eine Kantenlänge von etwa 200 µm aufweist.

In Fig. 4C ist der Fall gezeigt, bei sich die Hauptöffnungen 32 und 32' überhaupt nicht überdecken, so daß das Pinhole geschlossen ist. Wie den Fig. 4A-4C entnommen werden kann, kann mit den beiden Blendenelementen 31 und 31' ein Pinhole für die Singlespotbeleuchtung bereitgestellt werden, dessen Größe quasi stufenlos einstellbar ist. Damit kann das Pinhole für die Singlespotbeleuchtung für die jeweilige Meßaufgabe optimal angepaßt werden. Mit einem kleinen Pinhole kann man eine gute räumliche und spektrale Auflösung erzielen. Ein großes Pinhole kann benutzt werden, wenn das sogenannte optische sectioning bereits anregungsseitig realisiert ist, wie z.B. bei der Multiphotonenmikroskopie. Auch kann der optimale Pinholedurchmesser in der Fokusmodulationsmikroskopie größer als in der konfokalen Mikroskopie sein, wobei in der Regel der Pinholedurchmesser beleuchtungs- und anwendungsabhängig einstellbar ist

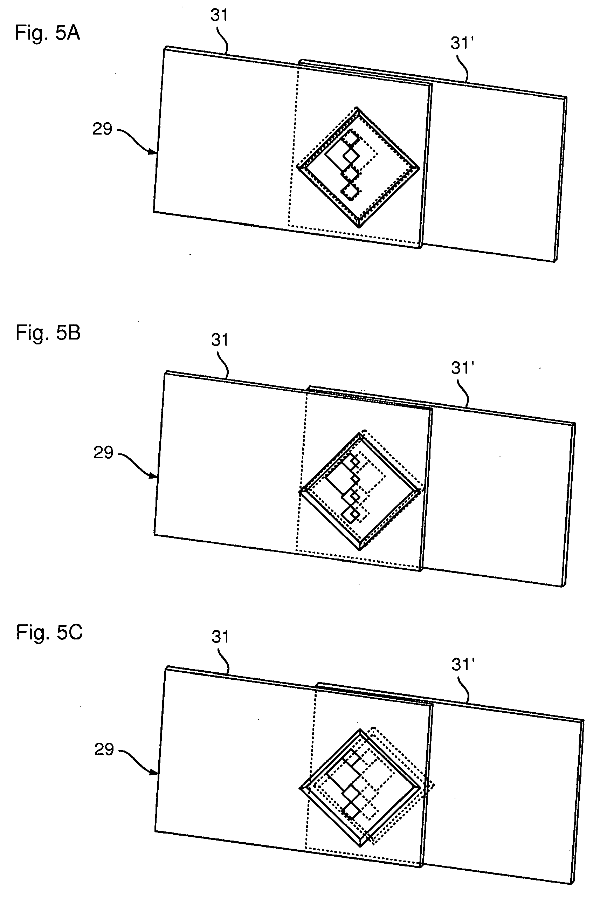

In Fig. 5A-5C sind Stellungen der beiden Blendenelemente 31, 31' für die Multispotbeleuchtung gezeigt. Bei der Darstellung gemäß Fig. 5A sind vier Pinholes mit einer Kantenlänge von etwa 240 µm bereitgestellt. Bei der in Fig. 5B gezeigten Stellung der beiden Blendenelemente 31 und 31' weisen die vier Pinholes eine Kantenlänge von ca. 120 µm auf. Bei der in Fig. 5C gezeigten Stellung, sind alle vier Pinholes geschlossen. Auch hier ist es wiederum möglich, die Größe der vier Pinholes quasi stufenlos zu verändern, wobei die einzelnen Pinholes bevorzugt jeweils gleich groß sind.

Alternativ ist es möglich, die beiden Blendenelemente 31 und 31' nicht nur, wie in Fig. 4A-4C und 5A-5C gezeigt, quer zur Anordnung der Öffnungen 32-35, 32'-35' zu verschieben, sondern in der Richtung der Anordnung der Öffnung 32-35, 32'-35' und somit von unten nach oben in den Darstellungen gemäß Fig. 4A-4C und Fig. 5A-5C. Damit ist es z.B. möglich, die Konfokalblende 6 zwischen einer Konfokalblende mit vier Pinholes und einer Konfokalblende mit drei Pinholes umzuschalten und ferner die Größe der drei bzw. vier Pinholes zu ändern.

Bei der hier beschriebenen Ausführungsform liegen die vier konfokal zu detektierenden Spots bzw. Bereiche auf einer Linie, wobei einer der vier dem optischen Hauptstrahl entspricht, der zur monofokalen Mikroskopie genutzt wird. Dies ist jedoch nur eine vorteilhafte Ausgestaltung, die nicht zwingend notwendig ist. Auch andere Anordnungen sind möglich. So können die vier Pinholes (oder im allgemeinen Fall die n Pinholes, wobei n eine ganze Zahl größer als 1 ist) in einer Matrix (und nicht entlang einer Linie) angeordnet sein. Dabei kann ein Pinhole dem Pinhole für die Singlespotbeleuchtung entsprechen. Alternativ kann ein separates Pinhole für die Singlespotbeleuchtung vorgesehen sein.

Die beiden Blendenelemente 31 und 31' können direkt anstelle einer einkanaligen konfokalen Blende in einem herkömmlichen Detektionsmodul angeordnet werden. Dabei sollte eine Pinholeoptik, die zwischen dem Hauptteiler 4 einerseits und den beiden Blendenelementen 31 und 31' andererseits angeordnet und Bestandteil der konfokalen Blendeneinheit 9 ist, das gesamte Lichtfeld mit hoher optischer Güte übertragen. Die Pinholeoptik kann auch als Zoomoptik ausgebildet sein. Dadurch können verschiedene Pinholegrößen aus einer Kombination von optischer Größe und mechanischer Öffnung der Blendenelemente 31, 31' eingestellt werden. Ferner kann damit ein System realisiert werden, in welchem bei variablem Spotabstand in der Probe 8 das identische Array von Pinholeblenden verwendet werden kann. Eine Änderung des Spotabstandes in der anderen Richtung wird dann über eine entsprechende Zoomeinstellung wieder ausgeglichen, oder eine Zoomoptik wird direkt vor dem Scanner 5 plaziert. In vorteilhafter Weise wird dabei der Blendendurchmesser so mitgeändert, daß die konfokalen Eigenschaften erhalten bleiben.

Die beiden Blendenelemente 31 und 31' können mittels einem oder mehrerer geeigneter Aktuatoren, wie z.B. ein Festkörpergelenk, ein Piezoaktuator, ein Stell- bzw. Schrittmotor mit Linearführung oder ein anderes Mittel, bewegt werden.

In Fig. 6 ist beispielhaft ein weiteres Blendenelement 31, 31' gezeigt. Durch entsprechende Anordnung von zwei solcher Elemente zueinander und Verschieben, wie in Verbindung mit Fig. 4A-4C und 5A-5C beschrieben wurde, kann zwischen einem Einspot- und einem Multispot-Betrieb umgeschaltet werden und kann gleichzeitig die Größe des Pinhole bzw. der Pinholes eingestellt werden. Die unterschiedlichen Ausgestaltungen der beschriebenen Blendenelemente 31, 31' gemäß Figuren 3 und 6 resultieren von unterschiedlichen Ätztechnologien bzw. der Nutzung unterschiedlicher Wafer bei der Herstellung der Blenden auf Silizium-Basis. Natürlich können die Blenden mit ähnlicher Geometrie aus anderen Materialien hergestellt werden, wie z.B. durch Laserschneiden verdünnter Metallfolie.

Falls der Single- und/oder Multispot als linienförmig fokussierter Laserstrahl bzw. Laserstrahlen, vorliegen, sind natürlich die Pinholeformen der Konfokalblende entsprechend angepaßt.

Auch ist es möglich, das hier beschriebene Prinzip der Umschaltung zwischen einer Singlespot- und einer Multispotblende durch schaltbare Elemente zu realisieren. Dazu können beispielsweise reflektierende MEMS-Spiegel (MEMS = micro electro mechanical systems = Mikrosystemtechnik) realisiert werden. In diesem Fall werden die Pinholes durch reflektive Elemente realisiert. Somit wird keine Öffnung im eigentlichen Sinne bereitgestellt, sondern eine sehr kleine reflektierende Fläche, die als Pinhole wirkt, da nur Licht, das auf diese kleine Fläche bzw. diese kleinen Flächen trifft, reflektiert und im Detektor 11 analysiert wird.

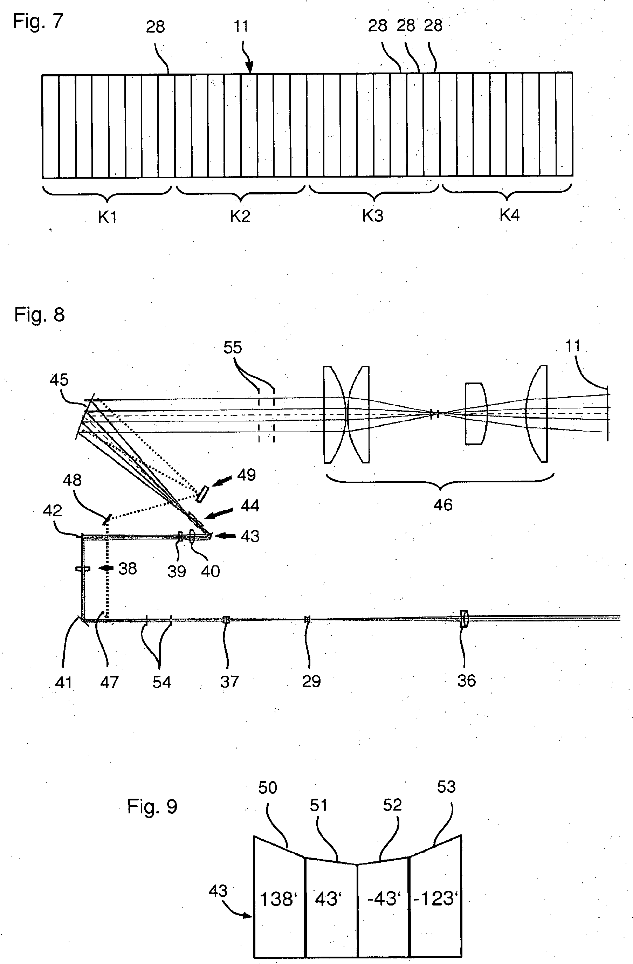

Der Detektor 11 ist hier, wie schematisch in Fig. 7 gezeigt ist, als Sensorzeile mit 32 Elementen 28 (z. B. ein Multianoden-Photomultiplier) ausgebildet, und wird so genutzt, daß bei Singlespotbeleuchtung die konfokal detektierte Probenstrahlung spektral auf alle 32 Elemente 28 des Detektors 11 aufgefächert wird. Bei der Multispotbeleuchtung mit vier Spots werden die spektral detektierten vier Spots spektral aufgefächert und so nebeneinander angeordnet, daß in jedem der Bereiche K1 bis K4 einer der vier detektierten Spots spektral aufgefächert ist. Es stehen also jeweils bis zu acht Elemente 28 des Detektors 11 für einen der vier Kanäle K1-K4 zur spektralen Detektion zur Verfügung.

Um diese Detektion durchführen zu können, ist der Strahlweg im Detektormodul 7 umschaltbar. In Fig. 8 sind beide Strahlwege eingezeichnet, wobei der Strahlweg für die Multispotbeleuchtung mit durchgezogenen Linien und der Strahlenweg für die Singlespotbeleuchtung hauptsächlich mit gestrichelten Linien eingezeichnet ist.

Das Detektormodul 7 enthält die bereits beschriebenen Konfokalblende 29 samt Pinholeoptik 36, einen der Konfokalblende 29 nachgeordneten Kollimator 37, drei Linsen 38, 39 und 40, die eine Teleskopoptik bilden, zwei Umlenkspiegel 41, 42 zur Strahlengangfaltung, einen Segmentspiegel 43, ein Geradesichtprisma 44, einen Hohlspiegel 45, eine Detektionsoptik 46 sowie den Detektor 11.

Bei der hier beschriebenen Ausführungsform erfordert die Abbildung der Pinholes für die Multispotbeleuchtung auf den Detektor 11 eine 18-fache Vergrößerung, damit die entsprechenden Spotsignale für eine bestimmte Wellenlänge auf je ein zugeordnetes Element 28 des Sensors 11 fallen. Allerdings wird bei einer rein optischen Vergrößerung, wie sie z.B. über ein Teleskop erfolgen kann, die Abbildungs-PSF (PSF = point spread function = Punktantwort) auf dem Detektor 11 mit dem gleichen Faktor skaliert. Dies führt in der Folge unter Umständen dazu, daß die spektrale Kantensteilheit nicht mehr wie gewünscht gegeben ist. Um dem entgegen zu wirken, wird die Abbildung mehrstufig durchgeführt, wobei eine erste Stufe z.B. eine klassische Teleskopvergrößerung ist und eine zweite Stufe rein geometrisch den Winkelabstand zwischen den n Bündeln (hier vier Bündel) einstellt, indem diese unabhängig voneinander abgelenkt werden. Dafür ist eine axiale Position geeignet, an welcher die Bündel räumlich getrennt vorliegen. Damit werden zwar in gewünschter Weise die Winkel zwischen den n Bündeln geändert, nicht aber die Abbildungsqualität (wie z.B. PSF-Größe, spektrale Kantensteilheit, etc.) auf dem Detektor 11.

Die erste Stufe der Teleskopvergrößerung wird hier mittels der drei Linsen 38 bis 40 durchgeführt, wobei die Brennweite der Linse 38 88 mm und die Brennweiten der Linsen 39 und 40 jeweils 30,7 mm betragen. Dadurch treffen die Bündel mit einem Durchmesser von 0,5 mm und einem Abstand von 1,0 mm auf den Segmentspiegel 43, der in Fig. 9 vergrößert dargestellt ist. Der Segmentspiegel 43 weist vier reflektive Segmente bzw. Facetten 50, 51, 52, 53 auf, die einen Neigungswinkel von 138', 43', -43' sowie -123' aufweisen. Die einzelnen von den Facetten 50-53 reflektierten Strahlenbündel durchlaufen das Geradsichtprisma 44, das z.B. als Amici-Prisma ausgebildet sein kann, wodurch der freie Winkelabstand zwischen den Bündeln mit Spektralinformation aufgefüllt und diese aufgrund des Hohlspiegels 45 und der Detektionsoptik 46 auf dem Detektor abgebildet werden. Es wird also eine spektrale Auffächerung mittels dem Prisma 44 durchgeführt, so daß für jeden der vier Kanäle K1-K4 jeweils die spektrale Information auf acht Elemente 28 des Detektors 11 treffen, wobei die vier Kanäle K1-K4 nebeneinander angeordnet sind, so daß alle 32 Elemente 28 des Detektors 11 zur Detektion genutzt werden.

Für die Singlespotbeleuchtung ist ein Umlenkspiegel 47 vorgesehen, der in den Strahlengang zwischen dem Kollimator 37 und dem Umlenkspiegel 41 positioniert werden kann. Diese Position ist in Fig. 8 gestrichelt dargestellt. Somit wird die detektierte Strahlung auf einen weiteren Umlenkspiegel 48 umgelenkt und von diesem auf ein Gitter 49, das die gewünschte spektrale Aufspaltung durchführt. Vom Gitter 49 erfolgt eine Umlenkung in Richtung zum Hohlspiegel 45, so daß dann wiederum eine Abbildung mittels der Detektionsoptik 46 auf dem Detektor 11 erfolgen kann.

Der Hohlspiegel 45 kann in seiner Blickrichtung einstellbar sein, um zwischen dem multi- und dem monofokalen .Strahlweg umschalten zu können.

Neben dem Segmentspiegel 43 sind auch andere Mittel zur geometrischen Winkelvergrößerung möglich. Beispielsweise kann man ein Mikrolinsenarray wenige Millimeter hinter der Konfokalblende 29 anordnen, wobei jedem Pinhole eine Mikrolinse mit negativer Brechkraft zugeordnet ist. Dadurch läßt sich spotweise die numerische Apertur vergrößern, so daß sich ein kleineres Spotprofil in der Detektorebene ergibt. Die axiale Lage des Mikrolinsenarrays wird dabei von einem Kompromiß zwischen möglichst geringer Überstrahlung der Linsenapertur (möglichst kleiner Abstand zur Konfokalblende) und dem Effekt der Vergrößerung der numerischen Apertur (größerer Abstand, Strahltaille wird hinter das Pinhole gezogen) bestimmt.

Ebenfalls rein geometrisch vergrößernd wirkt eine Umordnung der Spots in einem Zwischenbild innerhalb eines Teleskops. Hier bietet sich das Teleskop (Linsen 38 bis 40) zur vergrößerten Abbildung der Konfokalblende auf den Detektor 11 an, wobei der Abstand der ersten Linse 38 von der Linse 39 vergrößert wird, so daß die Fokusebene der Linse 38 (erste Teiloptik) mit der Fokusebene der Linsen 39, 40 (zweite Teiloptik) nicht mehr wie bisher zusammenfällt. Diese Umordnung kann dann mittels eines Glasfaserbündels oder mittels einer Wave-Guide-Struktur geschehen. Die Bedingung dabei ist, daß die in der Fokusebene der zweiten Teiloptik liegenden Ausgänge der Fasern des Glasfaserbündels bzw. der Wave-Guide-Struktur größer beabstandet sind als die in der Fokusebene der ersten Teiloptik liegenden Eingänge der Glasfaserbündel bzw. der Wave-Guide-Struktur.

Bei dem Aufbau gemäß Fig. 8 können die Signale der einzelnen Spots optisch ineinander übersprechen, beispielsweise durch Überstrahlung der Facetten 50-53 des Segmentspiegels 43. Dies kann z.B. durch Beugungseffekt am Pinhole hervorgerufen werden oder über weit ins langwellige auslaufende Spektren von rot emittierenden Farbstoffen, die dann bereits wieder die blauen Kanäle des nachfolgenden Spots beleuchten. Das spektral verursachte Übersprechen läßt sich durch Einfügen eines Kurzpaßfilters 54 in den Strahlengang oder mit entsprechend angepaßten Ent- und Verspiegelungsschichten auf den bereits vorgesehenen optischen Elementen minimieren. Das durch Facettenüberstrahlung hervorgerufene Übersprechen läßt sich minimieren, indem in einer Pupillenebene des multifokalen Strahlengangs, in der sich alle Strahlen schneiden, eine Blende 55 eingefügt wird, die die aus dem nominellen Strahlweg herausgebeugten Lichtanteile blockiert.

Auch der Einsatz einer Wellenleiterstruktur kann das beugungsbedingte Übersprechen unterdrücken, indem die Akzeptanzwinkel für die Wellenleitung durch Auswahl der Wellenleitermaterialien so gewählt werden, daß gebeugtes Licht aus dem benachbarten Pinhole keine Wellenleitung erfährt.

Falls bei der Multispotbeleuchtung zumindest ein Teilstrahl blockiert ist, wie oben als mögliche Alternative beschrieben wurde, können im einfachsten Fall nur die relevanten Sensorelemente 28 ausgelesen werden. Wenn z. B. ein Teilstrahl blockiert ist, dessen angeregte Probenstrahlung im Bereich K4 des Detektors 11 detektiert werden würde, werden die Sensorelemente des Bereichs K4 nicht ausgelesen und/oder ausgewertet.

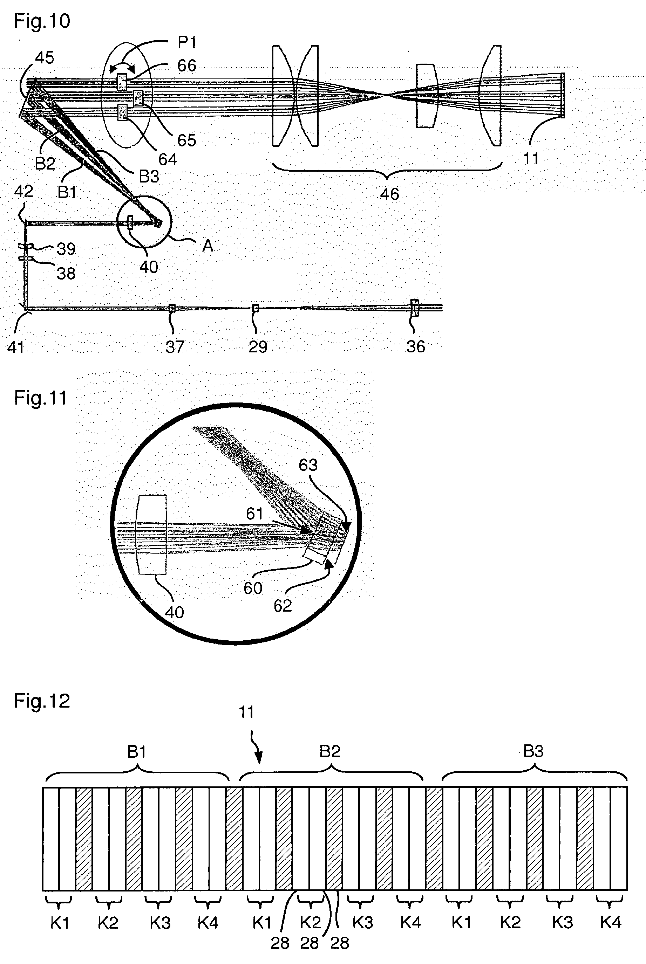

In Fig. 10 ist eine Ausgestaltung des Detektormoduls 7 gezeigt, bei der die Aufspaltung in drei verschiedene Spektralkanäle mittels Filter erfolgt, wobei mindestens zwei in ihrer spektralen Reflexions- und Transmissionscharakteristik einstellbar sind. Dies kann beispielsweise über unabhängig voneinander verschiebbare Kantenfilter mit verlaufender Spektrallage der Filterkante realisiert werden. Ein dritter Filter kann als feststehendes Element mit konstanter Filterfunktion, gegebenenfalls auch als Breitbandspiegel ausgeführt sein, da dieser nur die spektralen Emissionsreste am roten oder blauen Rand des Spektralbereiches reflektieren muß.

Bei dem in Fig. 10 gezeigten Ausführungsbeispiel werden die beiden einstellbaren Filterfunktionen auf einem Substrat 60 realisiert, wobei eine Filterfunktion auf der Vorderseite 61 des Substrates 60 aufgebracht ist, die zweite auf der Rückseite 62, wie am besten in der vergrößerten Ansicht des Details A von Fig. 10 in Fig. 11 zu sehen ist. Das Filtersubstrat 60 ist mit einem Keilwinkel versehen, damit die beiden erzeugten Spektralbilder letztendlich auf unterschiedliche Sensorelemente des Detektors 11 abgebildet werden. Das Filtersubstrat 60 kann beispielsweise in zwei orthogonale Richtungen lateral zur Strahlachse verschiebbar sein. Die Änderung der spektralen Lage der Filterkante auf der Vorderseite 61 ändert sich dann durch Verschieben des Filters 60 in der einen Richtung, die spektrale Filterkante auf der Filterrückseite 62 bei Verschieben in der dazu orthogonalen Richtung. Der feststehende dritte Filter ist in Fig. 11 mit dem Bezugszeichen 63 bezeichnet.

Der Strahlweg für den Singlespot ist in Fig. 10 und 11 nicht eingezeichnet, kann aber in gleicher Weise wie bei der Ausführungsform gemäß Fig. 7 ausgebildet sein.

Das von den drei Filterflächen reflektierte Licht verläßt nun in drei Spektralbändern B1, B2 und B3 aus je vier Bündeln (die den vier Pinholes entsprechen) unter unterschiedlichen Winkeln die Filterkaskade derart, daß die nachfolgende Optik 45, 46 die vier Spots (K1-K4) innerhalb eines Spektralbandes mit einem Sensorelement 28 Sicherheitsabstand auf den Detektor 11 abbildet (d.h. dieses Element wird unter Umständen nicht ausgelesen und ist in Fig. 12 schraffiert dargestellt). Die Probenstrahlung jedes Pinholes ist somit auf die drei Spektralbänder B1-B3 aufgeteilt und in Fig. 12 als K1, K2, K3 bzw. K4 bezeichnet. Der Abstand der Spektralbänder B1, B2 und B3 zueinander beträgt mindestens ein Element (in Fig. 12 schraffiert dargestellt). Der Detektor 11 gemäß Fig. 12 weist daher 35 Sensorelemente 28 auf. Natürlich kann der Abstand der Spektralbänder B1-B3 zueinander mehr als ein Sensorelement 28 betragen. So ist ein Abstand von mindestens 4-5 Elementen 28 bevorzugt. In diesem Fall weist der Detektor 11 natürlich eine entsprechende Anzahl von Sensorelementen 28 auf. Somit ist optisches und elektronisches Übersprechen zwischen den Spots und zwischen den Spektralkanälen B1-B3 faktisch ausgeschlossen.

Die filterbasierte Ausführungsform kann natürlich auch so ausgelegt sein, daß z. B. ein 32fach-Multianoden-Photomultiplier 11 nutzbar ist, wie er in Fig. 7 gezeigt ist. Wenn jedem Spot pro Spektralband B1-B3 nur ein Sensorelement zugeordnet wird, kann auch Sicherheitsabstand zwischen den Spektralkanälen vorgesehen werden: 4 x (3 Farben) x 2 (wegen 1 Element Sicherheitsabstand) = 24 Sensorelemente 28 als minimale Pixelierung. Das hat den Vorteil, daß ein kommerzieller Multianoden-Photomultiplier von Hamamatsu (H7260-200) eingesetzt werden kann. Natürlich können die verbleibenden acht Sensorelemente (32 - 24 = 8) auch noch als Sicherheitsabstand zwischen den genutzten Sensorelementen 28 genutzt werden.

Nachdem die Bündel der Spektralbänder B1-B3 deutlich voneinander separiert liegen, können Transmissionsfilter 64, 65, 66 (z.B. je ein Transmissionsfilter 64, 65, 66 pro Spektralband B1-B3) eingebracht werden, deren Filtercharakteristik entweder als Kantenfilter (vorzugsweise Kurzpaßfilter) oder Bandpaßfilter ausgelegt ist. Die Transmissionsfilter 64-66 können beispielsweise an einer Position zwischen dem Hohlspiegel 45 und der Detektionsoptik 46 angeordnet werden, wie in Fig. 10 eingezeichnet ist. Die Transmissionsfilter 64-66 sind des weiteren rotierbar (durch Pfeil P1 angedeutet), vorzugsweise um eine Substratkante, angeordnet, um sie einerseits vollständig aus dem Strahlengang herausschwenken zu können. In diesem Fall stören sie nicht den monofokalen Betrieb. Andererseits wird dadurch die spektrale Lage der roten Flanke des jeweiligen Spektralbereiches einstellbar. Hierzu ist insbesondere die Verwendung von VersaChrome-Filtern der Firma Semrock Inc. vorteilhaft, da diese über einen sehr großen Winkelbereich keine Aufspaltung zwischen p- und s-Polarisation zeigen und somit die Fluoreszenz für beide Polarisationsrichtungen gleichmäßig sensitiv sowie bandbreitenrichtig detektiert werden kann. Damit kann eine Verschiebung der Kanalflanken um 80 bis 100 nm realisiert werden. Somit ist die Bandbreite dieses Detektionskanals nahezu stufenlos einstellbar, so daß beispielsweise Autofluoreszenz effizient geblockt werden kann.

Eine weitere Möglichkeit, die Variabilität der Filterung zu erreichen, bietet sich dann, wenn das Lichtrastermikroskop 1 vornehmlich mit Laser fester Wellenlängen bestückt ist, wie es bei gut 90% der konfokalen Mikroskope zur linearen Fluoreszenzanregung der Fall ist. Dann lassen sich auf der Vorder- und Rückseite 61, 62 Kombinationen von Filterkanten aufbringen, die an die Kombinatorik der überhaupt nur möglichen Laserkombination angepaßt sind, woraus sich abzählbar viele Filterkombinationen ergeben. Die Filterfunktionen sind vorzugsweise als Langpaßfilter ausgeführt. Aber auch Kurzpaßfilter sind vorteilhaft einsetzbar.

## Patentansprüche

1. Lichtrastermikroskop mit
einem Beleuchtungsmodul (2) zum Anregen von Probenstrahlung in einem vorbestimmten Bereich einer Probe, das zwischen einer Beleuchtung mit m Spots, wobei m eine ganze Zahl ist, die größer oder gleich 1 ist, und einer Beleuchtung mit n Spots, wobei n eine ganze Zahl und größer als m ist, umschaltbar ist,
einer Ablenkeinheit (5), die die m bzw. n Spots in dem vorbestimmten Bereich bewegt,
und einem Detektormodul (7) zum konfokalen und spektral aufgelösten Detektieren der Probenstrahlung,
wobei das Detektormodul (7)
eine Konfokalblendeneinheit (9),
eine der Konfokalblendeneinheit (9) nachgeordnete Aufspaltungseinheit zum spektralen Auffächern der Probenstrahlung in Teilstrahlen, und einen Detektor aufweist, **dadurch gekennzeichnet, dass** das Detektormodul
eine Abbildungseinheit (46), die die Teilstrahlen räumlich getrennt auf den Detektor (11) abbildet, aufweist,
wobei die Konfokalblendeneinheit (9) zwischen einer Konfokalblende mit genau m Öffnungen für die Probenstrahlung bei Beleuchtung mit m Spots und einer Konfokalblende mit n Öffnungen für die Probenstrahlung bei Beleuchtung mit n Spots umschaltbar ist,
und die Aufspaltungseinheit von der Konfokalblendeneinheit (9) bis zur Abbildungseinheit (46) einen ersten Strahlweg für die Probenstrahlung bei Beleuchtung mit m Spots und einen zweiten Strahlweg für die Probenstrahlung bei Beleuchtung mit n Spots aufweist und die Aufspaltungseinheit zwischen beiden Strahlwegen umschaltbar ist.

2. Lichtrastermikroskop nach Anspruch 1, bei dem die konfokale Blendeneinheit (9) eine Konfokalblende (29) aufweist, die zwischen m Öffnungen und n Öffnungen umschaltbar ist.

3. Lichtrastermikroskop nach Anspruch 1, bei dem die Konfokalblendeneinheit eine erste Konfokalblende mit genau m Öffnungen und eine zweite Konfokalblende mit n Öffnungen aufweist und die Umschaltung zwischen der ersten und zweiten Konfokalblende durch Umschaltung des Strahlweges bewirkt ist.

4. Lichtrastermikroskop nach einem der obigen Ansprüche, bei dem die Größe der m Öffnungen und/oder die Größe der n Öffnungen änderbar ist.

5. Lichtrastermikroskop nach einem der obigen Ansprüche, bei dem derselbe Detektor (11) zur Detektion der Probenstrahlung bei Beleuchtung mit m und n Spots eingesetzt ist.

6. Lichtrastermikroskop nach einem der obigen Ansprüche, bei dem die Aufspaltungseinheit die Probenstrahlung bei Beleuchtung mit n Spots so aufspaltet, daß Spektrum und Ort orthogonal zueinander stehen.

7. Lichtrastermikroskop nach einem der Ansprüche 1 bis 5, bei dem die Aufspaltungseinheit bei Beleuchtung mit n Spots Spektrum und Ort der Spots in derselben Richtung so aufspaltet, daß die verschiedenen Spots spektral aufgespalten nebeneinander angeordnet sind.

8. Lichtrastermikroskop nach einem der Ansprüche 1 bis 5, bei dem die Aufspaltungseinheit bei Beleuchtung mit n Spots Spektrum und Ort der Spots in derselben Richtung so aufspaltet, daß Teile gleicher Wellenlänge der Spots direkt nebeneinander liegen.

9. Lichtrastermikroskop nach einem der obigen Ansprüche, bei dem die Aufspaltungseinheit eine Vergrößerungsoptik (38, 39, 40) und eine Optikeinheit (43) zur Vergrößerung der Winkel der Teilstrahlen zueinander ohne Änderung des optischen Abbildungsmaßstabs aufweist.

10. Lichtrastermikroskop nach Anspruch 8, bei dem die Optikeinheit (43) zur Vergrößerung der Winkel ein segmentiertes Opiikelement (43) aufweist.

11. Lichtrastermikroskop nach einem der Ansprüche 1 bis 8, bei dem die Aufspaltungseinheit eine Vergrößerungsoptik (38, 39, 40) und eine Optikeinheit zur lokalen Erhöhung der numerischen Apertur der Teilstrahlen aufweist.

12. Lichtrastermikroskop nach einem der Ansprüche 1 bis 8, bei dem die Aufspaltungseinheit eine Vergrößerungsoptik (38, 39, 40) mit einer ersten und einer zweiten Teiloptik (38; 39, 40) sowie eine Wellenleiterstruktur aufweist, wobei die erste Teiloptik (38) eine zwischen beiden Teiloptiken (38; 39, 40) liegende erste Fokusebene und die zweite Teiloptik (39, 40) eine von der ersten Fokusebene beabstandete sowie zwischen beiden Teiloptiken (38; 39, 40) liegende zweite Fokusebene aufweist und die Wellenleiterstruktur für jeden der m oder n Öffnungen der Konfokalblendeneinheit einen Wellenleiter aufweist, wobei die Eingänge der Wellenleiter in der ersten Fokusebene und die Ausgänge der Wellenleiter in der zweiten Fokusebene liegen und wobei der Abstand der Ausgänge der Wellenleiter größer ist als der Abstand der Eingänge der Wellenleiter.

13. Lichtrastermikroskop nach einem der obigen Ansprüche, bei dem in jedem der beiden Strahlwege der Aufspaltungseinheit eine separate Einheit zum spektralen Auffächern angeordnet ist.

14. Lichtrastermikroskop nach einem der obigen Ansprüche, bei dem m = 1.

15. Lichtrastermikroskop nach einem der obigen Ansprüche, bei dem die Ablenkeinheit (5) dem Detektormodul (7) die Probenstrahlung als descannte Probenstrahlung zuführt.

16. Lichtrastermikroskop nach einem der obigen Ansprüche, bei dem die Konfokalblendeneinheit (9) zwischen k Konfokalblenden mit k verschiedenen Anzahlen von Öffnungen umschaltbar ist, wobei k eine ganze Zahl größer als zwei ist.

17. Lichtrastermikroskopierverfahren, bei dem
die Beleuchtung eines vorbestimmen Bereiches einer Probe zum Anregen von Probenstrahlung zwischen einer Beleuchtung mit m Spots, wobei m eine ganze Zahl ist, die größer oder gleich 1 ist, und einer Beleuchtung mit n Spots, wobei n eine ganze Zahl und größer als m ist, umschaltbar ist,
die m bzw. n Spots zur Beleuchtung in dem vorbestimmten Bereich bewegt werden und
die Probenstrahlung mit einem Detektormodul konfokal und spektral aufgelöst detektiert wird, wobei das Detektormodul
eine Konfokalblendeneinheit,
eine der Konfokalblendeneinheit nachgeordnete Aufspaltungseinheit zum spektralen Auffächern der Probenstrahlung in Teilstrahlen,
einen Detektor und eine Abbildungseinheit, die die Teilstrahlen räumlich getrennt auf den Detektor abbildet, aufweist,
wobei die Konfokalblendeneinheit zwischen einer Konfokalblende mit genau m Öffnungen für die Probenstrahlung bei Beleuchtung mit m Spots und einer Konfokalblende mit n Öffnungen für die Probenstrahlung bei Beleuchtung mit n Spots umgeschaltet wird,
und die Aufspaltungseinheit zwischen einem von der Konfokalblendeneinheit bis zur Abbildungseinheit verlaufenden ersten Strahlweg für die Probenstrahlung bei Beleuchtung mit m Spots und einem von der Konfokalblendeneinheit bis zur Abbildungseinheit verlaufenden zweiten Strahlweg für die Probenstrahlung bei Beleuchtung mit n Spots umgeschaltet wird.

## Claims

1. Light scanning microscope, comprising
an illumination module (2) for exciting sample radiation within a predetermined area of a sample, which illumination module is switchable between illumination with m spots, m being an integer greater than or equal to 1, and illumination with n spots, n being an integer greater than m,
a deflection unit (5) which moves the m or n spots within the predetermined area,
and a detector module (7) for confocal and spectrally resolved detecting of the sample radiation,
wherein the detector module (7) has
a confocal diaphragm unit (9),
a decomposition unit, arranged downstream of the confocal diaphragm unit (9), for spectrally spreading the sample radiation into component beams,
and a detector,
**characterized in that** the detector module has an imaging unit (46) which images the component beams onto the detector (11) in a spatially separate manner, wherein the confocal diaphragm unit (9) is switchable between a confocal diaphragm with exactly m openings for the sample radiation when illuminating with m spots and a confocal diaphragm with n openings for the sample radiation when illuminating with n spots,
and the decomposition unit has, from the confocal diaphragm unit (9) up to the imaging unit (46), a first beam path for the sample radiation when illuminating with m spots, and has a second beam path for the sample radiation when illuminating with n spots, and the decomposition unit is switchable between both beam paths.

2. Light scanning microscope according to Claim 1, in which the confocal diaphragm unit (9) has a confocal diaphragm (29) which is switchable between m openings and n openings.

3. Light scanning microscope according to Claim 1, in which the confocal diaphragm unit has a first confocal diaphragm with exactly m openings and a second confocal diaphragm with n openings, and switching between the first and the second confocal diaphragm is effected by switching the beam path.

4. Light scanning microscope according to one of the preceding claims, in which the size of the m openings and/or the size of the n openings is modifiable.

5. Light scanning microscope according to one of the preceding claims, in which the same detector (11) is used to detect the sample radiation when illuminating with m spots and with n spots.

6. Light scanning microscope according to one of the preceding claims, in which, when illuminating with n spots, the decomposition unit separates the sample radiation such that spectrum and location are mutually orthogonal.

7. Light scanning microscope according to one of Claims 1 to 5, in which, when illuminating with n spots, the decomposition unit separates the spectrum and the location of the spots in the same direction such that the different spots are arranged next to one another in spectrally decomposed fashion.

8. Light scanning microscope according to one of Claims 1 to 5, in which, when illuminating with n spots, the decomposition unit separates the spectrum and the location of the spots in the same direction such that components having the same wavelength of the spots are located directly next to one another.

9. Light scanning microscope according to one of the preceding claims, in which the decomposition unit has magnification optics (38, 39, 40) and an optical unit (43) for enlarging the angles of the component beams with respect to one another without changing the magnification.

10. Light scanning microscope according to Claim 8, in which the optical unit (43) for enlarging the angles has a segmented optical element (43).

11. Light scanning microscope according to one of Claims 1 to 8, in which the decomposition unit has magnification optics (38, 39, 40) and an optical unit for locally increasing the numerical aperture of the component beams.

12. Light scanning microscope according to one of Claims 1 to 8, in which the decomposition unit has magnification optics (38, 39, 40) having a first and a second partial optics (38; 39, 40) and a waveguide structure, wherein the first partial optics (38) has a first focal plane between both partial optics (38; 39, 40) and the second partial optics (39, 40) has a second focal plane between both partial optics (38; 39, 40) that is located spaced apart from the first focal plane, and the waveguide structure has a waveguide for each of the m or n openings of the confocal diaphragm unit, wherein the inputs of the waveguides are located in the first focal plane and the outputs of the waveguides are located in the second focal plane and wherein the distance between the outputs of the waveguides is greater than the distance between the inputs of the waveguides.

13. Light scanning microscope according to one of the preceding claims, in which a separate unit for spectral spreading is arranged in each of the two beam paths of the decomposition unit.

14. Light scanning microscope according to one of the preceding claims, in which m = 1.

15. Light scanning microscope according to one of the preceding claims, in which the deflection unit (5) guides the sample radiation to the detector module (7) in the form of descanned sample radiation.

16. Light scanning microscope according to one of the preceding claims, in which the confocal diaphragm unit (9) is switchable between k confocal diaphragms having k different numbers of openings, k being an integer greater than two.

17. Light scanning microscopy method, in which
the illumination of a predetermined area of a sample for exciting sample radiation is switchable between illumination with m spots, m being an integer greater than or equal to 1, and illumination with n spots, n being an integer greater than m,
the m or n spots for illumination are moved within the predetermined area, and
the sample radiation is detected using a detector module in a confocal and spectrally resolved manner, wherein the detector module has
a confocal diaphragm unit,
a decomposition unit, arranged downstream of the confocal diaphragm unit, for spectrally spreading the sample radiation into component beams,
a detector and an imaging unit that images the component beams onto the detector in a spatially separate manner,
wherein the confocal diaphragm unit is switched between a confocal diaphragm with exactly m openings for the sample radiation when illuminating with m spots and a confocal diaphragm with n openings for the sample radiation when illuminating with n spots,
and the decomposition unit is switched between a first beam path for the sample radiation, extending from the confocal diaphragm unit up to the imaging unit, when illuminating with m spots, and a second beam path for the sample radiation, extending from the confocal diaphragm unit up to the imaging unit, when illuminating with n spots.

## Revendications

1. Microscope à balayage optique comportant
un module d'éclairement (2) destiné à exciter un rayonnement d'échantillon dans une région prédéterminée d'un échantillon qui peut être amenée à basculer entre un éclairement par m points lumineux, où m est un nombre entier supérieur ou égal à 1, et un éclairement à n points lumineux, où n est un nombre entier supérieur à m,
une unité de déviation (5) qui déplace les m ou n points lumineux dans la région prédéterminée,
et un module détecteur (7) destiné à détecter de manière confocale et résolue spectralement le rayonnement de l'échantillon,
dans lequel le module détecteur (7) comprend une unité à diaphragme confocal (9),
une unité de décomposition disposée en aval de l'unité à diaphragme confocal (9) pour disperser spectralement le rayonnement de l'échantillon, et
un détecteur,
**caractérisé en ce que** le module détecteur comprend une unité de formation d'image (46) qui forme l'image des faisceaux partiels de manière spatialement séparée sur le détecteur (11),
dans lequel l'unité à diaphragme confocal (9) peut être amenée à basculer entre un diaphragme confocal comportant exactement m ouvertures pour le rayonnement de l'échantillon lors d'un éclairement par m points lumineux et un diaphragme confocal à n points lumineux pour le rayonnement de l'échantillon lors d'un éclairement par n points lumineux,
et l'unité de décomposition, depuis l'unité à diaphragme confocal (9) jusqu'à l'unité de formation d'image (46), comprend un premier chemin optique pour le rayonnement de l'échantillon lors d'un d'éclairement par m points lumineux et un second chemin optique pour le rayonnement de l'échantillon lors d'un éclairement par n points lumineux et l'unité de décomposition peut être amenée à basculer entre les deux chemins optiques.

2. Microscope à balayage optique selon la revendication 1, dans lequel l'unité à diaphragme confocal (9) comprend un diaphragme confocal (29) qui peut être amené à basculer entre m ouvertures et n ouvertures.

3. Microscope à balayage optique selon la revendication 1, dans lequel l'unité à diaphragme confocal comprend un premier diaphragme confocal comportant exactement m ouvertures et un second diaphragme confocal à n ouvertures et le basculement est effectué entre les premier et second diaphragmes confocaux par basculement du chemin optique.

4. Microscope à balayage optique selon l'une quelconque des revendications précédentes, dans lequel la taille des m ouvertures et/ou la taille des n ouvertures est modifiable.

5. Microscope à balayage optique selon l'une quelconque des revendications précédentes, dans lequel un même détecteur (11) est utilisé pour détecter le rayonnement de l'échantillon lors d'un éclairement par m et par n points lumineux.

6. Microscope à balayage optique selon l'une quelconque des revendications précédentes, dans lequel l'unité de décomposition décompose le rayonnement de l'échantillon lors d'un éclairement par n points lumineux de manière à ce que le spectre et la position soient orthogonaux l'un à l'autre.

7. Microscope à balayage optique selon l'une quelconque des revendications 1 à 5, dans lequel l'unité de décomposition, lors d'un éclairement par n points lumineux, décompose le spectre et la position du point lumineux dans la même direction de manière à ce que les différents points lumineux soient disposés côte à côte de manière spectralement décomposée.

8. Microscope à balayage optique selon l'une quelconque des revendications 1 à 5, dans lequel l'unité de décomposition, lors d'un éclairement par n points lumineux, décompose le spectre et la position du point lumineux dans la même direction de manière à ce que des parties ayant les mêmes longueurs d'onde du point lumineux se situent directement côte à côte.

9. Microscope à balayage optique selon l'une quelconque des revendications précédentes, dans lequel l'unité de décomposition comprend une optique de grossissement (38, 39, 40) et une unité optique (43) destinées à augmenter l'angle des faisceaux partiels les uns par rapport aux autres sans modification de l'échelle optique de formation d'image.

10. Microscope à balayage optique selon la revendication 8, dans lequel l'unité optique (43) comprend un élément optique segmenté (43) pour augmenter l'angle.

11. Microscope à balayage optique selon l'une quelconque des revendications 1 à 8, dans lequel l'unité de décomposition comprend une optique de grossissement (38, 39, 40) et une unité optique destinées à augmenter localement l'ouverture numérique des faisceaux partiels.

12. Microscope à balayage optique selon l'une quelconque des revendications 1 à 8, dans lequel l'unité de décomposition comprend une optique de grossissement (38, 39, 40) comportant des première et seconde optiques partielles (38 ; 39, 40) ainsi qu'une structure de guide d'ondes, dans lequel la première optique partielle (38) comprend un premier plan focal situé entre les deux optiques partielles (38 ; 39, 40) et dans lequel la seconde optique partielle (39, 40) comprend un second plan focal disposé de manière espacée du premier plan focal et entre les deux optiques partielles (38 ; 39, 40) et la structure de guide d'ondes comprend un guide d'ondes pour chacune des m ou des n ouvertures de l'unité à diaphragme confocal, dans lequel les entrées des guides d'ondes se situent dans le premier plan focal et les sorties des guides d'ondes se situent dans le second plan focal et dans lequel l'écartement des sorties des guides d'ondes est supérieur à l'écartement des entrées des guides d'ondes.

13. Microscope à balayage optique selon l'une quelconque des revendications précédentes, dans lequel une unité séparée est disposée sur chacun des deux chemins optiques de l'unité de décomposition pour la décomposition spectrale.

14. Microscope à balayage optique selon l'une quelconque des revendications précédentes, dans lequel m = 1.

15. Microscope à balayage optique selon l'une quelconque des revendications précédentes, dans lequel l'unité de déviation (5) achemine le rayonnement de l'échantillon vers le module détecteur (7) sous la forme d'un rayonnement d'échantillon à balayage compensé.

16. Microscope à balayage optique selon l'une quelconque des revendications précédentes, dans lequel l'unité à diaphragme confocal (9) peut être amenée à basculer entre k diaphragmes confocaux avec k nombres différents d'ouvertures, où k est un nombre entier supérieur à deux.

17. Procédé de microscopie à balayage optique, dans lequel
l'éclairement d'une région prédéterminée d'un échantillon, pour l'excitation d'un rayonnement de l'échantillon, peut être amené à basculer entre un éclairement par m points lumineux, où m est un nombre entier supérieur ou égal à 1, et un éclairement par n points lumineux, où n est un nombre entier et est supérieur à m,
les m ou n points lumineux sont déplacés dans la région prédéterminée pour l'éclairement et
le rayonnement de l'échantillon est détecté de manière confocale et spectralement résolue par un module détecteur,
dans lequel le module détecteur comprend une unité à diaphragme confocal,
une unité de décomposition disposée en aval de l'unité à diaphragme confocal pour décomposer spectralement le rayonnement de l'échantillon en des faisceaux partiels, un détecteur et une unité de formation d'image qui forme une image des faisceaux partiels spatialement séparés sur le détecteur,
dans lequel l'unité à diaphragme confocal peut être amenée à basculer entre un diaphragme comportant exactement m ouvertures pour le rayonnement de l'échantillon lors d'un éclairement par m points lumineux et un diaphragme confocal à n ouvertures pour le rayonnement de l'échantillon lors d'un éclairement par n points lumineux,
et l'unité de décomposition est amenée à basculer entre un premier chemin optique s'étendant depuis l'unité à diaphragme confocal jusqu'à l'unité de formation d'image pour le rayonnement de l'échantillon lors d'un éclairement par m points lumineux et un second chemin optique s'étendant depuis l'unité à diaphragme confocal jusqu'à l'unité de formation d'image pour le rayonnement de l'échantillon lors d'un éclairement par n points lumineux.
